# EUROPÄISCHE PATENTSCHRIFT

(11) **EP 0 361 123 B1**
(45) Veröffentlichungstag und Bekanntmachung des Hinweises auf die Patenterteilung: **30.03.1994**
(21) Anmeldenummer: 89116164.8
(22) Anmeldetag: 01.09.1989
(51) Int. Cl.: B65B 3/02, B29C 49/04, B29C 49/00, B65B 41/18, B29C 47/22

(54) **Verfahren zum Herstellen gefüllter Flüssigkeitsbehälter aus thermoplastischem Kunststoff sowie Extrusionskopf**
Method of making liquid-filled containers from thermoplastics material, and extrusion die therefor
Procédé de fabrication de récipients en matière thermoplastique, remplis de fluide ainsi que tête d'extrusion

(30) Priorität: 24.09.1988 DE 3832566
(43) Veröffentlichungstag der Anmeldung: 04.04.1990
(73) Patentinhaber: Hansen, Bernd, Dipl.-Ing., D-74429 Sulzbach-Laufen (DE)
(72) Erfinder: Hansen, Bernd, Dipl.-Ing., D-74429 Sulzbach-Laufen (DE)
(74) Vertreter: Patentanwälte Bartels und Partner

(56) Entgegenhaltungen:
- DE-A- 3 520 638
- FR-A- 1 166 775
- FR-A- 2 343 577
- FR-A- 2 358 318
- GB-A- 747 434
- US-A- 1 791 144
- US-A- 3 423 902
- US-A- 3 884 611
- US-A- 3 899 276
- US-A- 3 940 221
- KUNSTSTOFFE Bd. 69, Nr. 4, 1979, München 'Mehrfach-Blasformen mit Zentralschlauch '
- SEIFEN-ÖLE-FETTE-WACHSE Bd. 96, Nr. 19, 16. September 1970, L.ZIMMERMANN: 'Verpackungsfragen: Das bottle-pack-Verfahren in der chemisch-technischen Industrie und in der Kosmetik '
- AUTOMATION Bd. 11, Nr. 10, Oktober 1964, Seiten 66 - 71; J.L.LAREW: 'Controlling register on packaging materials '
- PATENT ABSTRACTS OF JAPAN vol. 5, no. 172 (M-95)(844) 31. Oktober 1981

## Beschreibung

Die Erfindung betrifft ein Verfahren zum Herstellen gefüllter Flüssigkeitsbehälter aus thermoplastischem Kunststoff, bei welchem der Kunststoff zu einem Schlauch extrudiert wird, der Schlauch mittels an seiner Schlauchwandung wirksamen Differenzdrucks mit seiner Außenseite derart an die Wände eines Formwerkzeuges angelegt wird, daß der Schlauch zu einem Behälterband geformt wird, das eine Mehrzahl nebeneinanderliegender Kleinbehälter, vorzugsweise ampullenartiger Form, aufweist, die Behälter durch an ausgewählten Wandungsabschnitten durchgeführte Schweißvorgänge geschlossen werden und jeder Behälter vor dem Durchführen eines seine Einfüllöffung verschließenden letzen Schweißvorganges mittels je eines mit dieser zusammenwirkenden Fülldornes zumindest im wesentlichen gleichzeitig mit den anderen Behältern befüllt wird. Außerdem bezieht sich die Erfindung auf einen zum Herstellen eines Schlauches für die Durchführung eines Verfahrens der vorstehend erwähnten Art vorgesehenen Extrusionskopf, der die Merkmale des Oberbegriffs des Anspruches 4 aufweist.

Ein Verfahren der eingangs genannten Art ist bereits aus der FR-A-2 358 318 bekannt. Nach diesem Verfahren wird beim Anlegen der Außenseite des in runder Form extrudierten Kunststoffschlauches an die Wände des Formwerkzeuges, dessen Breite wesentlich größer ist als der Durchmesser des runden Kunststoffschlauches, dieser zunächst verbreitert und ovalisiert, indem der Schlauch über einen gekühlten Formkörper gezogen wird, der sich zwischen der Extrusionsstelle und dem Formwerkzeug befindet.

Bei einem in der einschlägigen Fachliteratur aufgezeigten, ähnlichen Verfahren, vgl. "Kunststoffe", Band 69, Nr. 4, April 1979, Seite 218, München, DE, wird ein extrudierter, runder Zentralschlauch mittels einer Schlauchzange derart ovalisiert, daß sich die Außenseite des Schlauches über die gesamte Breite eines betreffenden Formwerkzeuges erstreckt, mit dessen Hilfe bis zu 12 Behälter in einem Arbeitsgang hergestellt werden.

Der Erfindung liegt die Aufgabe zugrunde, ein Herstellungsverfahren der eingangs genannten Art zu schaffen, das für die besonders rationelle Herstellung kleinvolumiger Behälter, vorzugsweise ampullenartiger Behälter für die pharmazeutische Industrie, in hohen Stückzahlen besonders gut geeignet ist.

Bei einem Verfahren der eingangs genannten Art ist diese Aufgabe erfindungsgemäß dadurch gelöst, daß der Schlauch für das Anlegen seiner Außenseite an die Wände des eine Mehrzahl nebeneinanderliegender Behälter bildenden Formwerkzeuges in Form eines breiten Flachschlauches extrudiert wird.

Dadurch, daß erfindungsgemäß bereits das Extrudieren des Schlauches mit einer Querschnittsform erfolgt, bei der sich die Außenseite des Schlauches über eine entsprechende Anzahl von nebeneinanderliegenden Formnestern des betreffenden Formwerkzeuges erstreckt, erübrigen sich die bei den üblichen, bekannten derartigen Verfahren erforderlichen Maßnahmen zur Verformung, d.h. Verbreiterung des Kunststoffschlauches. Dadurch ergibt sich nicht nur eine Rationalisierung bei der Verfahrensdurchführung, sondern auch eine wesentliche Verbesserung der Güte der hergestellten Behälter. Da keine mechanische Verformung des Schlauches zwischen dessen Extrusion und der Weiterbearbeitung im Formwerkzeug erforderlich ist, wobei es bei den bekannten Verfahren zu örtlich unterschiedlichen Streckungen der Schlauchwandung kommen kann, zeichnen sich die erfindungsgemäß hergestellten Behälter durch eine besonders gleichmäßige Beschaffenheit der Behälterwandung aus.

Bei Extrusion des Kunststoffschlauches in Form eines breiten Flachschlauches kann ohne weiteres ein Formwerkzeug verwendet werden, das eine verhältnismäßig große Anzahl nebeneinanderliegender Kleinbehälter formt. Dadurch, daß sich auf diese Weise eine entsprechende Vielzahl von Behältern gleichzeitig füllen läßt, wofür eine entsprechende Vielzahl von Fülldornen verwendet wird, lassen sich besonders hohe Stückzahlen pro Fertigungszeiteinheit erreichen. Das Extrudieren des Flachschlauches kann kontinuierlich erfolgen. Dabei können, wie es auch bei bekannten Verfahren der eingangs genannten Art üblich ist, bewegliche Formteile des Formwerkzeuges auf geschlossenen Umlaufbahnen geführt sein, so daß sie eine Kette aus Formteilen bilden, die sich am Einlaufbereich des sich vom Extrusionskopf nach abwärts bewegenden Flachschlauchs schließen.

Dadurch, daß die Behälter mittels der sich im Innenraum des Flachschlauches erstreckenden Fülldorne bereits im Bereich des Formwerkzeugs gefüllt und sodann verschlossen werden, ist das erfindungsgemäße Verfahren für aseptisches Abfüllen besonders gut geeignet, weil bei einer solchen kontinuierlichen Herstellungsweise keine Handhabung offener, ungefüllter Behälter stattfindet, so daß die Gefahr einer Kontaminierung von außen her nicht gegeben ist.

Hohe Produktionsgeschwindigkeiten sind beim erfindungsgemäßen Verfahren auch deshalb erreichbar, weil das das Formwerkzeug verlassende Behälterband in Form eines Kunststoffbandes mit in Bandlängsrichtung hintereinander angeordneten Gruppen mehrerer nebeneinanderliegender Behälter besonders einfach und rationell gehandhabt und zur Herstellung einzelner Behälterstreifen, beispielsweise sog. Ampullenblocks, oder einzelner Kleinbehälter weiterverarbeitbar ist. Das Behälterband wird zu diesem Zwecke einer Stanzeinrichtung zur Abfallentfernung zugeführt. In der Stanzeinrichtung wird das Kunststoffband in dem als Seitenabfall abzutrennenden Seitenrandbereich fest eingespannt. Sodann wird der Behälterstreifen aus dem Band herausgedrückt, so daß als Abfall eine Kunststoffkette zurückbleibt.

Bei einem vorteilhaften Ausführungsbeispiel werden an zumindest einem der als Seitenabfall zurückbleibenden Seitenränder des Kunststoffbands im Formwerkzeug Gestaltsunregelmäßigkeiten ausgebildet, beispielsweise vorspringende Nocken, Vertiefungen oder Durchbrüche. Diese Gestaltsunregelmäßigkeiten, die in vorbestimmter Lagebeziehung zur benachbarten Gruppe nebeneinanderliegender Behälter angeordnet sind, können als Positioniermittel zur Steuerung der Vorschubbewegung des Kunststoffbandes zwischen Formwerkzeug und Stanzeinrichtung und zum genauen Positionieren des Kunststoffbandes in der Stanzeinrichtung benutzt werden. Beispielsweise kann das Behälterband durch ein mit den Gestaltsunregelmäßigkeiten in mechanichen Eingriff bringbares, bewegliches Vorschubglied zur Stanzeinrichtung transportiert werden.

Aufgabe der Erfindung ist es auch, einen Extrusionskopf zu schaffen, der die Herstellung eines Kunststoffschlauches ermöglicht, der für die Durchführung des erfindungsgemäßen Verfahrens geeignet ist.

Bei einem Extrusionskopf der eingangs erwähnten Art ist diese Aufgabe erfindungsgemäß dadurch gelöst, daß die Ringöffnung die Form eines abgeflachten Ringes mit zwei einander gegenüberliegenden, zumindest näherungsweise gerade verlaufenden Langseiten und mit die einander benachbarten Enden der beiden Langseiten verbindenden, kurzen, gekrümmten Stirnseiten besitzt, daß der Extrusionskopf eine Reihe durchgehender Bohrungen aufweist, in deren jeder ein Fülldorn längsbeweglich angeordnet ist und deren untere Bohrungsenden zwischen den Langseiten der Ringöffnung gelegen sind, daß mehrere Steuermittel vorhanden sind, von denen zumindest einige verstellbar ausgebildet sind und zumindest die letzteren zur wahlweisen Beeinflussung unterschiedlicher, zu verschiedenen Längenabschnitten der Ringöffnung fließender Zonen des Kunststoffstromes am Strömungskanal in ausgewählter Lageanordnung vorgesehen sind, und daß jedes verstellbare Steuermittel unabhängig von den anderen Steuermitteln verstellbar ist.

Die Vielzahl der vorhandenen Steuermittel, ihre verteilte Anordnung am Strömungskanal in solcher Lageanordnung, daß unterschiedliche Zonen des Kunststoffstromes beeinflußbar sind, und die Verstellbarkeit der einzelnen Steuermittel unabhängig voneinander ermöglicht eine Abstimmung des aus der Ringöffnung des Extrusionskopfes austretenden Kunststoffstroms in einer optimalen Weise. So läßt sich gewährleisten, daß ein Flachschlauch verhältnismäßig großer Breite mit gleichmäßiger Geschwindigkeit und über den gesamten Schlauchumfang gleichmäßiger Wanddicke aus der Ringöffnung austritt. Der Flachschlauch umgibt die Fülldorne, die sich in einer Reihe hintereinander längs der Breitseiten des Flachschlauches erstrecken.

Nachstehend ist die Erfindung anhand eines in der Zeichnung dargestellten Ausführungsbeispiels im einzelnen erläutert.

Es zeigen:
- Fig. 1: eine teils aufgebrochen und geschnitten gezeichnete Seitenansicht eines Ausführungsbeispiels eines Schlauch-Extrusionskopfes;
- Fig. 2: eine Stirnansicht des Extrusionskopfes von Fig. 1, wobei eine Hälfte im Schnitt nach der Schnittlinie II-II von Fig. 1 dargestellt ist;
- Fig. 3: eine Draufsicht des Extrusionskopfes mit in Fig. 1 mit III angegebener Blickrichtung;
- Fig. 4: eine stark schematisch vereinfacht und gegenüber Fig. 1 bis 3 in kleinerem Maßstab gezeichnete Ansicht einer Stanzeinrichtung;
- Fig. 5: eine gegenüber Fig. 4 vergrößert gezeichnete Detaildarstellung des in Fig. 4 mit V bezeichneten Bereichs, wobei der Eingriff zwischen einem Vorschubglied und einem Kunststoff-Behälterband gezeigt ist;
- Fig. 6: einen abgebrochen gezeichneten Teilabschnitt des Kunststoff-Behälterbandes und
- Fig. 7: eine stark schematisch vereinfachte Darstellung des Zusammenwirkens von Extrusionskopf und Formwerkzeug zur Bildung des Kunststoff-Behälterbandes.

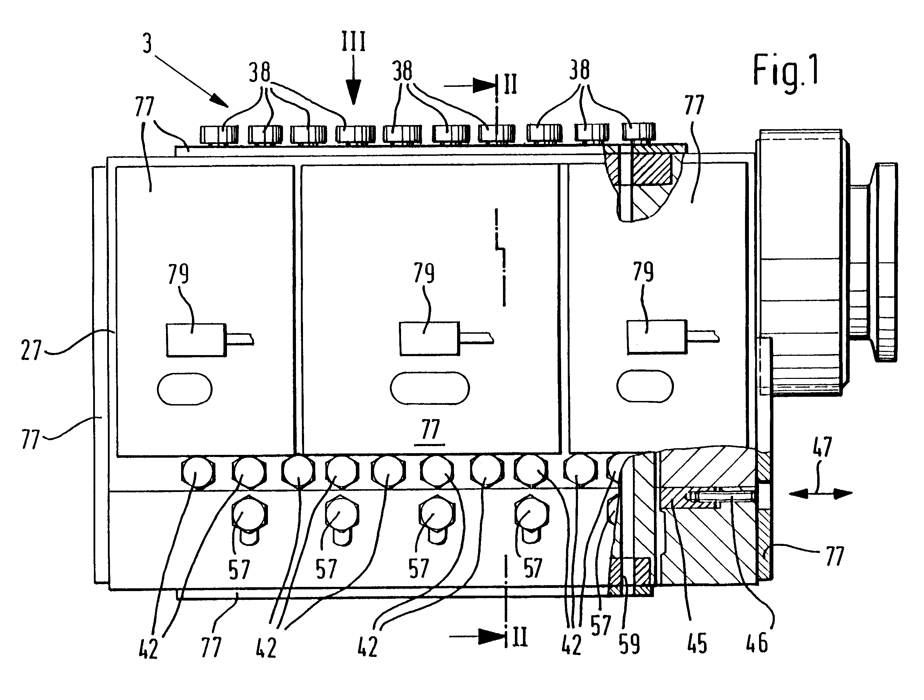

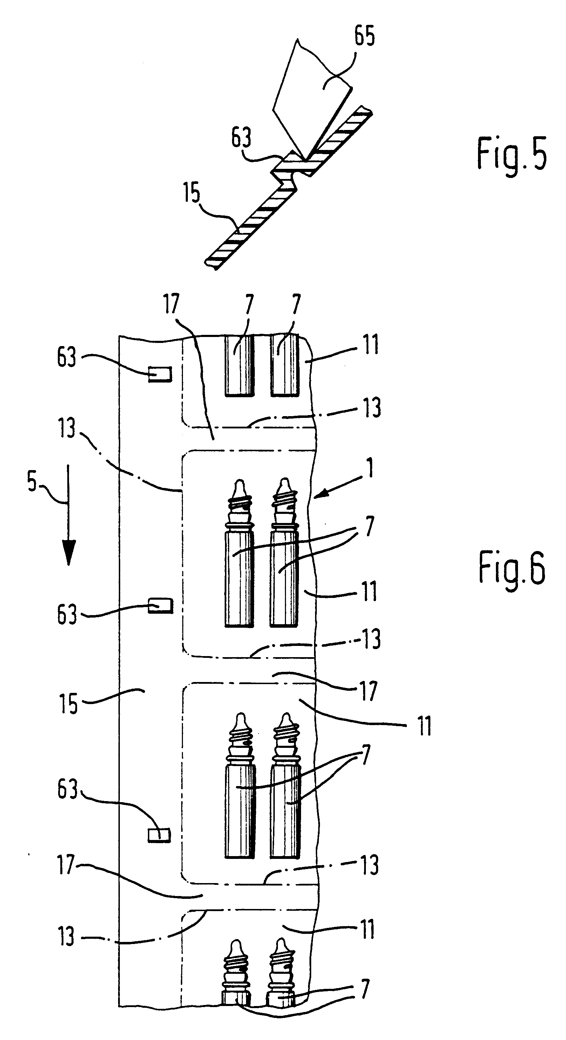

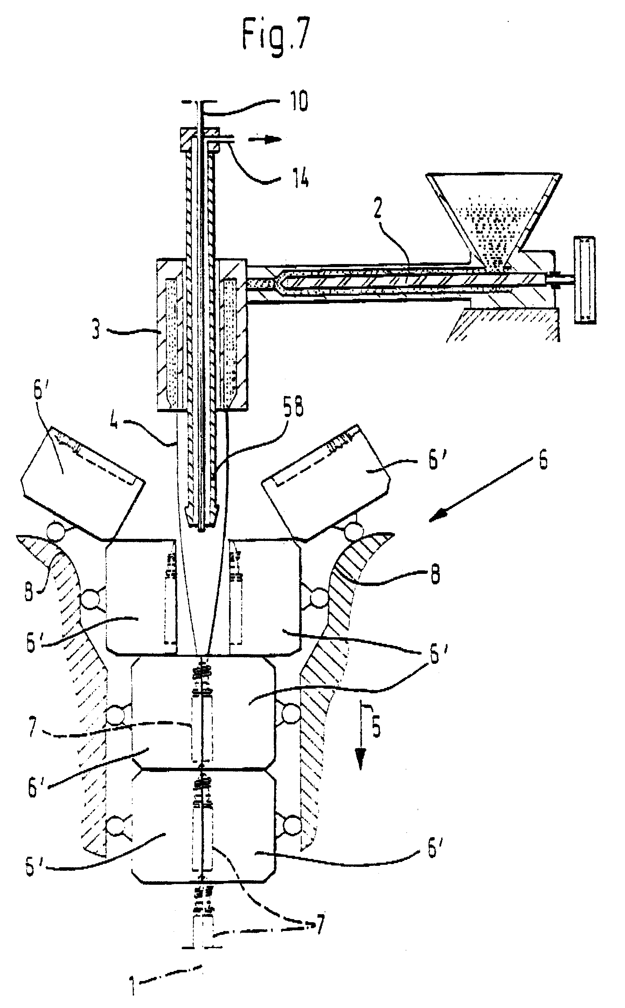

Fig. 6 zeigt einen seitlichen Teilabschnitt eines als Ganzes mit 1 bezeichneten Behälterbandes, das unter Verwendung eines breiten Flachschlauches 4 (siehe Fig. 7) gefertigt ist, der aus in einem Extruder 2 plastifiziertem thermoplastischem Kunststoff mittels eines Schlauch-Extrusionskopfes 3 hergestellt ist, von dem nähere Einzelheiten in Fig. 1 bis 3 gezeigt sind. Das Behälterband 1 ist in Fig. 6 in unabgeteiltem Zustand dargestellt, d.h. in dem Zustand, in dem das Behälterband 1 ein in Fig. 7 vereinfacht dargestelltes Formwerkzeug 6 in der mit einem Richtungspfeil 5 angegebenen Vorschubrichtung verläßt.

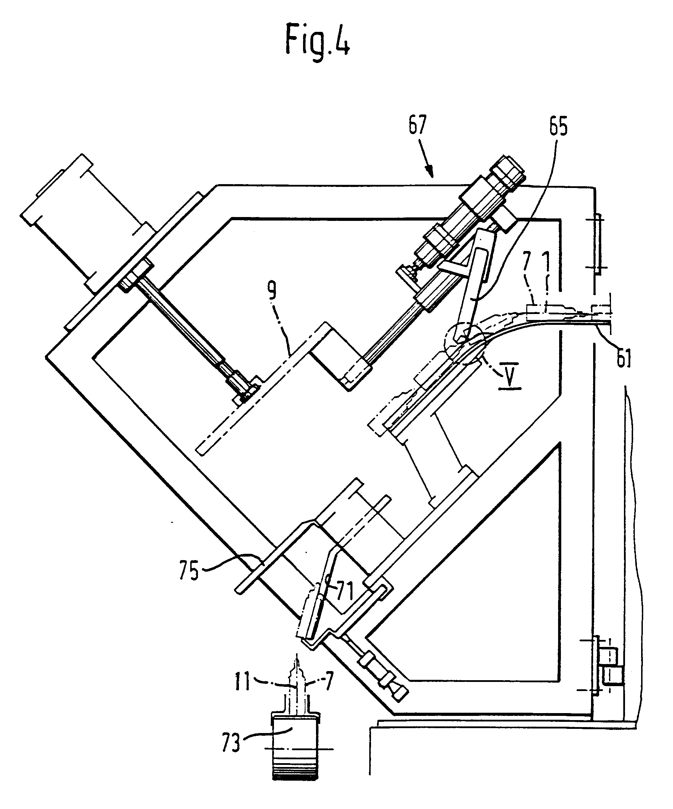

Das Formwerkzeug 6 weist in der bei bekannten Behälterformverfahren üblichen Weise bewegliche Formteile auf, die mit einer der Geschwindigkeit des in sie einlaufenden Flachschlauches 4 entsprechenden Geschwindigkeit auf geschlossenen Umlaufbahnen an Kurvenschienen 8 geführt und mit nicht dargestellten Kühlmittel- und Unterdruckleitungen verbindbar sind. Mittels angelegten Unterdrucks werden durch Vakuumformung Gruppen (siehe Fig. 6) von nebeneinanderliegenden Kleinbehältern in Form von Ampullen 7 geformt, wobei jede Behältergruppe im vorliegenden Beispiel aus 14 Ampullen 7 besteht, von denen in Fig. 6 lediglich zwei außenliegende Ampullen 7 jeder Gruppe gezeigt sind. Das unabgeteilte Behälterband 1 wird in der mit dem Pfeil 5 gegebenen Vorschubrichtung einer in Fig. 4 angedeuteten Stanzeinrichtung 9 zugeführt, in der einzelne Behälterstreifen 11, also im vorliegenden Falle Ampullenblöcke mit je 14 Ampullen, aus dem Behälterband 1 längs strichpunktierter Stanzlinien 13 ausgestanzt werden, so daß ein Abfallrahmen mit je einem Seitenabfall 15 an jedem seitlichen Längsrand, von denen in Fig. 6 nur einer zu sehen ist, sowie mit vom Seitenabfall 15 in Querrichtung verlaufenden Abfallstegen 17 gebildet werden.

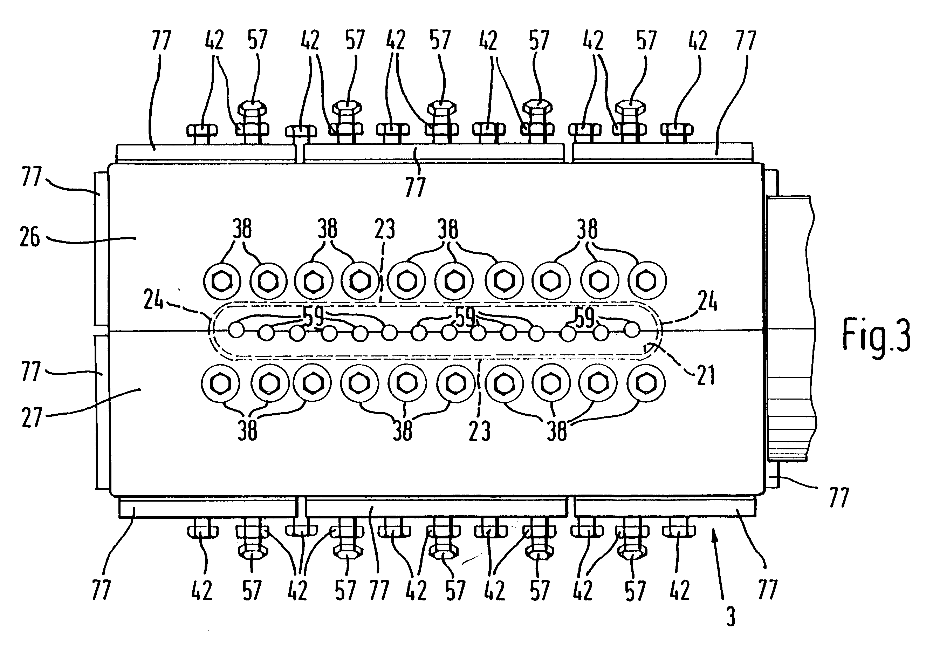

Für die Erläuterung des Schlauch-Extrusionskopfes 3 zur Bildung des Flachschlauches 4 für die Herstellung des Behälterbandes 1 wird nachfolgend insbesondere auf die Fig. 1 bis 3 Bezug genommen. Entsprechend der abgeflachten Querschnittsform des herzustellenden Flachschlauches weist der nachstehend kurz "Schlauchkopf" genannte Schlauch-Extrusionskopf einen unteren Extrusionsschlitz 33 in Form einer in Fig. 3 mit gestrichelter Linie gezeigten Ringöffnung 21 auf, die zwei einander gegenüberliegende, gerade Langseiten 23 sowie gekrümmte, kurze Stirnseiten 24 besitzt. In Anpassung an diese flache, langgestreckte Querschnittsform weist der Schlauchkopf 3 einen Körper in Form eines länglichen Blockes auf, der aus zwei zueinander spiegelbildlich gleich ausgebildeten Kopfhälften 26 und 27 zusammengesetzt ist, wobei die zugehörigen Verschraubungen in der vereinfachten Darstellung der Figuren nicht gezeigt sind.

Jede der Kopfhälften 26, 27 ist über eine Zuführbohrung 29 mit dem Extruder 2 für die Zufuhr plastifizierter Kunststoffmasse verbunden. Die Bohrungen 29 münden in einen zur Ringöffnung 21 führenden Strömungskanal, der in seinem der Ringöffnung 21 benachbarten unteren Kanalabschnitt die Form eines Ringspaltes 31 hat, der in Umfangsrichtung der Ringöffnung 21 ohne Unterbrechung durchgehend verläuft. Zur Steuerung des über die gesamte Umfangslänge der Ringöffnung 21 gleichmäßigen Austritts der Kunststoffmasse aus dem unteren Schlitz 33 sind am inneren Strömungskanal des Schlauchkopfes 3 mehrere unterschiedlich ausgebildete und in ausgewählter Lageanordnung eingebaute Strömungssteuermittel vorhanden. Zu diesen gehören fest eingestellte Steuermittel sowie verstellbare Steuermittel. Letztere sind von der Außenseite des Schlauchkopfes 3 her unabhängig voneinander einstellbar.

In dem den Bohrungen 29 benachbarten Einlaufbereich des Strömungskanals weist dieser als erste Strömungssteuermittel eine Reihe von in der Längsrichtung der Kopfhälften 26, 27 hintereinander, d.h., bezogen auf die Umfangsrichtung der Ringöffnung 21 und des Ringspaltes 31, nebeneinander angeordnete, erweiterte Strömungstaschen 35 auf, von denen beim hier gezeigten Ausführungsbeispiel bei jeder Kopfhälfte 26, 27 zehn Taschen 35 vorhanden sind. Der lichte Querschnitt des Einlaufbereichs kann bei jeder der Taschen 35 mittels eines von der Oberseite des Schlauchkopfes 3 vertikal nach einwärts ragenden Staubolzens 37 verändert werden, der in seiner längsrichtung mittels eines Verstellgewindes, das nicht dargestellt ist, lageeinstellbar ist. Für die Einstelldrehbewegung weist jeder Staubolzen 37 einen Innensechskantkopf 38 auf. An ihrem unteren Ende münden die Taschen 35 über je eine Verengung 39 in den durchgehenden Ringspalt 31 ein. Die Verengungen 39 bilden fest eingestellte Strömungssteuermittel in Form enger Drosselspalte.

Etwa auf der halben Strömungsweglänge zwischen den Verengungen 39 an den Taschen 35 und dem Schlitz 33 am Austrittsende der Ringöffnung 21 sind als verstellbare Strömungssteuermittel eine Reihe von beweglichen Schiebern 41 vorgesehen, die, bezogen auf die Umfangsrichtung oder bezogen auf die Langseiten 23 der Ringöffnung 21, hintereinanderliegend angeordnet sind, in einer gemeinsamen Horizontalebene liegen und bewegliche Drosselkörper bilden, die je eine eigens zugeordnete Zone des im Ringspalt 31 strömenden Kunststoffstromes beeinflussen. Jeder Schieber 41 ist mittels einer eigenen Stellschraube 42 in beiden mit einem Doppelpfeil 43 kenntlich gemachten Richtungen verstellbar. Beim Ausführungsbeispiel sind längs jeder Langseite 23 der Ringöffnung 21 je 11 Schieber 41 mit Stellschrauben 42 vorhanden. Je ein weiterer Schieber 45 mit einer zugehörigen Stellschraube 46 ist in auf die Stirnseiten 24 der Ringöffnung 21 ausgerichteter Lage vorgesehen. Die Schieber 45 sind in einer gemeinsamen Horizontalebene in mit einem Doppelpfeil 47 angegebenen beiden Verstellrichtungen mittels der zugehörigen Stellschrauben 46 verstellbar, wobei die Horizontalebene der Schieber 45 etwas unterhalb der Horizontalebene der Schieber 41 gelegen ist.

Als weitere verstellbare Steuermittel weist jede Kopfhälfte 26, 27 an dem unteren Randbereich, der an den Langseiten 23 der Ringöffnung 21 die äußere Begrenzung des Extrusionsschlitzes 33 bildet, eine Randleiste 51 auf, die mit dem unteren Abschnitt der Kopfhälfte 26 oder 27 einstückig ist, mit dem sie über einen durch eine Ausnehmung 53 verjüngten Verbindungsbereich 55 zusammenhängt. Aufgrund dieser Gestaltung ist die Randleiste 51 federelastisch beweglich und kann mittels in den Kopfhälften 26, 27 schräg verlaufend angeordneten Druckschrauben 57 gegen ihre Federelastizität nach einwärts gedrückt werden, um eine Feineinstellung der Breite des Schlitzes 33 zu bewirken. Bei dem hier gezeigten Ausführungsbeispiel sind an jeder Kopfhälfte 26, 27 über die Länge der Langseiten 23 der Ringöffnung 21 verteilt je 5 Druckschrauben 57 vorgesehen.

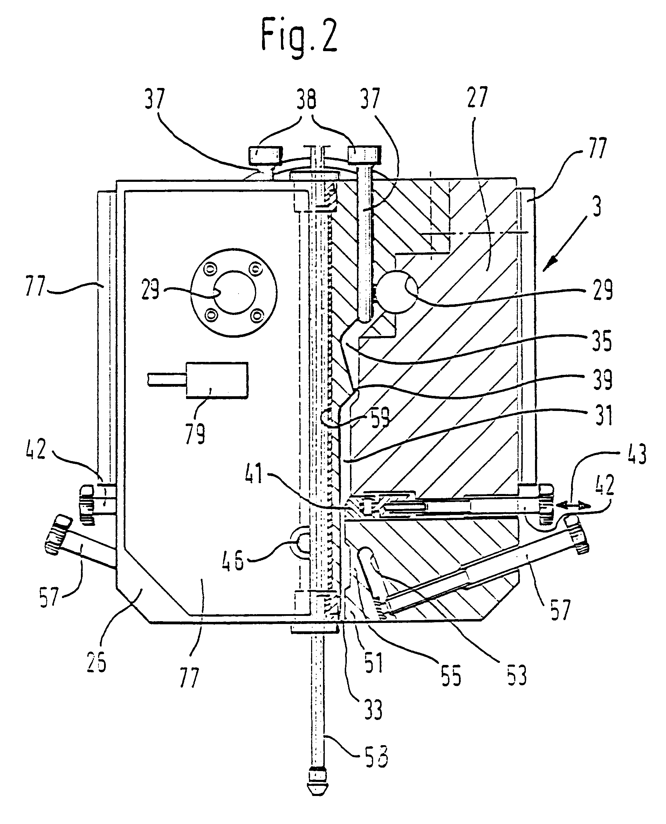

Der aus dem Schlitz 33 der Ringöffnung 21 austretende Flachschlauch 4, dessen Querschnittsform dem Umriß der Ringöffnung 21 (Fig. 3) entspricht, wird beim vorliegenden Ausführungsbeispiel im Formwerkzeug 6 zu einem Behälterband 1 geformt, das, wie oben bereits erwähnt, Gruppen von je 14 nebeneinanderliegender Ampullen 7 aufweist. Um ein gleichzeitiges Befüllen aller 14 Ampullen 7 zu ermöglichen, sind 14 Fülldorne 58 (Fig. 2 und 7) vorhanden, die in einer Reihe durchgehender Bohrungen 59, die sich in der zentralen Trennebene zwischen den Kopfhälften 26, 27 liegend durch den Schlauchkopf 3 erstrecken, längsverschieblich geführt sind. Die unteren Enden der Bohrungen 59 liegen mittig zwischen den Langseiten 23 der Ringöffnung 21, so daß sich die freien unteren Enden der Fülldorne 58 mittig innerhalb des sie umgebenden Flachschlauchs 4 gegen das Formwerkzeug 6 hin erstrecken, siehe Fig. 7. Aus letzterer Fig. 7 ist auch ersichtlich, daß am oberen Ende der Fülldorne 58 in üblicher Weise Füllrohranschlüsse 10 und Abluftanschlüsse 14 vorgesehen sind.

Das aus dem Formwerkzeug 6 austretende Behälterband 1 mit den gefüllten und verschlossenen Ampullen 7 wird über eine Transportbahn 61 zu der in Fig. 4 gezeigten Stanzeinrichtung 9 zugeführt. Um die Vorschubbewegung taktmäßig auf die Schweiß- und Füllvorgänge im Formwerkzeug 6 abzustimmen und das Behälterband 1 in der Stanzeinrichtung 9 in die richtige Arbeitsposition zu bringen, erfolgt der Vorschub des Behälterbandes 1 mittels Mitnehmernocken 63 (Fig. 5 und 6), die im Formwerkzeug 6 beidseits am Seitenabfall 15 des Behälterbandes 1 ausgeformt werden, und zwar in festgelegter Lagebeziehung zu der jeweils benachbarten Gruppe von Ampullen 7. Die Nocken 63 wirken mit seitlichen Vorschubgreifern 65 zusammen, von denen je einer auf jeder Seite des Behälterbandes 1, mit den Nocken 63 fluchtend, angeordnet und durch eine in Fig. 4 als Ganzes mit 67 bezeichnete Vorschubeinrichtung absatzweise antreibbar ist. Der Eingriff eines der Vorschubgrifer 65 mit einem der Nocken 63 ist in Fig. 5 vergrößert dargestellt. Nach jedem Vorschubschritt wird in der Stanzeinrichtung 9 mittels geeigneter Trennmesser ein Behälterstreifen 11 ausgestanzt, der über eine Erzeugnisrutsche 71 auf einen Erzeugnisförderer 73 gelangt und ausgetragen wird. Der in der Stanzeinrichtung 9 zurückbleibende Abfallrahmen tritt über eine Abfallrutsche 75 aus.

Bei der Durchführung des Verfahrens wird die im Extruder 2 aufgeschmolzene Kunststoffmasse durch die Bohrungen 29 in den Schlauchkopf 3 hineingedrückt. Eine erste gleichmäßige Verteilung der Kunststoffmasse auf die ganze Länge der beiden Kopfhälften 26, 27 erfolgt mit Hilfe der schräg auslaufenden Taschen 35, wobei die Gleichmäßigkeit des Verteilungsvorganges durch entsprechende Einstellung der Staubolzen 37 erreicht wird. Durch die als fest eingestellter Drosselspalt wirkende Verengung 39 am Austrittsbereich jeder Tasche 35 erfolgt ein allgemeiner Druckausgleich der Masse.

Eine weitere Vergleichmäßigung des Kunststoffstroms erreicht man durch entsprechende Einstellung der Schieber 41, von denen jeder einen verstellbaren Drosselspalt bildet, wobei eine unabhängige Einstellung verschiedener Längenbereiche über die Gesamtlänge der Langseiten 23 der Ringöffnung 21 möglich ist. Anders ausgedrückt, lassen sich durch die Schieber 41 unterschiedliche Zonen des Kunststoffstromes unabhängig beeinflussen, so daß der Zustrom zu den einzelnen Längenabschnitten der Langseiten 23 der Ringöffnung 21 individuell einstellbar ist. Eine Einstellung in dem Bereich der Stirnseiten 24 der Ringöffnung 21 erfolgt durch die Schieber 45. Eine letzte Feinabstimmung der Wanddicke des gebildeten Flachschlauches 4 erfolgt durch Einstellung der Randleiste 51 am Schlitz 33 mittels der Druckschrauben 57, wobei die Kontur des Schlitzes 33 in den verschiedenen Längenabschnitten unterschiedlich einstellbar ist, da über die Länge der Randleiste 51 verteilt mehrere Druckschrauben 57 vorhanden sind, die es ermöglichen, die Leiste 51 beispielsweise am einen Ende stärker als am anderen Ende vorzuspannen. Durch die Abstimmung dieser zahlreichen Einstellmöglichkeiten aufeinander läßt sich gewährleisten, daß der Flachschlauch 4 über seinen gesamten Umfang eine gleichmäßige Wanddicke und gleichmäßige Austrittsgeschwindigkeit aus dem Schlitz 33 hat.

Der Schlauchkopf 3 ist durch an seinen Außenseiten angeordnete erlektrische Heizelemente 77 beheizbar, deren elektrische Anschlüsse, die mit 79 bezeichnet sind, in der Zeichnung teilweise im Interesse der Übersichtlichkeit der Darstellung nicht dargestellt sind. Wenn die Energiezufuhr zu den einzelnen Heizelementen 77 über die Anschlüsse 79 individuell gesteuert wird, kann durch Einstellen örtlich unterschiedlicher Temperaturwerte am Schlauchkopf 3 eine weitere Feinabstimmung der Gleichmäßigkeit des Kunststoffstromes am Extrusionsschlitz 33 erfolgen. Der Schlauchkopf 3 kann so modifiziert werden, daß er für eine Co-Extrusion geeignet ist, bei der er aus mehreren Extrudern gespeist werden kann, so daß ein mehrlagiger Flachschlauch gegossen wird.

In der Stanzeinrichtung 9 können, anstatt Behälterstreifen 11 auszustanzen, auch einzelne Ampullen 7 aus dem Behälterband 1 herausgedrückt werden, die anschließend einzeln verpackt werden. Der in der Stanzeinrichtung 9 nach dem Stanzvorgang zurückbleibende Abfall kann noch im Bereich der Stanzeinrichtung zerkleinert und, falls erforderlich oder gewünscht, sofort wieder recyceld werden.

Die vorstehende Beschreibung und die Zeichnung beschränken sich nur auf die Angabe von Merkmalen, die für die beispielsweise Verkörperung der Erfindung wesentlich sind.
Soweit die Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Verfahren zum Herstellen gefüllter Flüssigkeitsbehälter aus thermoplastischem Kunststoff, bei welchem
a) der Kunststoff zu einem Schlauch extrudiert wird,
b) der Schlauch mittels an seiner Schlauchwandung wirksamen Differenzdrucks mit seiner Außenseite derart an die Wände eines Formwerkzeuges angelegt wird, daß der Schlauch zu einem Behälterband geformt wird, das eine Mehrzahl nebeneinanderliegender Kleinbehälter, vorzugsweise ampullenartiger, Form aufweist,
c) die Behälter durch an ausgewählten Wandungsabschnitten durchgeführte Schweißvorgänge geschlossen werden und
d) jeder Behälter vor dem Durchführen eines seine Einfüllöffnung verschließenden letzten Schweißvorganges mittels je eines mit dieser zusammenwirkenden Fülldornes zumindest im wesentlichen gleichzeitig mit den anderen Behältern befüllt wird,
dadurch gekennzeichnet,
e) daß der Schlauch für das Anlegen seiner Außenseite an die Wände des eine Mehrzahl nebeneinanderliegender Behälter bildenden Formwerkzeuges in Form eines breiten Flachschlauches extrudiert wird.

2. Verfahren nach Anspruch 1, dadurch gekennzeichnet, daß mittels des Formwerkzeuges an zumindest einem der beiden Seitenränder des Behälterbandes, die sich in der Längsrichtung der Behälter erstrecken, Gestaltsunregelmäßigkeiten ausgebildet werden, die zur jeweils benachbarten Gruppe von Behältern in festgelegter Lagebeziehung stehen, und daß die Gestaltsunregelmäßigkeiten als Positioniermittel zur Steuerung einer taktmäßig auf die Füll- und Schweißvorgänge der Behälter abgestimmten Vorschubbewegung des Behälterbandes zu einer Stanzeinrichtung verwendet werden, in der die Seitenränder des Behälterbandes als Seitenabfall abgetrennt werden.

3. Verfahren nach Anspruch 2, dadurch gekennzeichnet, daß die Gestaltsunregelmäßigkeiten in Form vorspringender Nocken, Vertiefungen oder Ausnehmungen ausgebildet werden und daß das Behälterband durch ein mit den Gestaltsunregelmäßigkeiten in mechanischen Eingriff bringbares, bewegliches Vorschubglied zur Stanzeinrichtung transportiert wird.

4. Extrusionskopf zum Herstellen eines Schlauches für die Durchführung des Verfahrens gemäß einem der Ansprüche 1 bis 3, mit zumindest einem inneren Strömungskanal für die Zufuhr fließfähigen thermoplastischen Kunststoffes zu einem Extrusionsschlitz, der in Form einer dem Querschnitt des Schlauches angepaßten Ringöffnung ausgebildet ist, und mit Steuermitteln zum Beeinflussen des im Strömungskanal zum Extrusionsschlitz fließenden Kunststoffstromes, dadurch gekennzeichnet, daß
a) die Ringöffnung (21) die Form eines abgeflachten Ringes mit zwei einander gegenüberliegenden, zumindest näherungsweise gerade verlaufenden Langseiten (23) und mit die einander benachbarten Enden der beiden Langseiten (23) verbindenden, kurzen, gekrümmten Stirnseiten (24) besitzt,
b) der Extrusionskopf (3) eine Reihe durchgehender Bohrungen (59) aufweist, in deren jeder ein Fülldorn (58) längsbeweglich angeordnet ist und deren untere Bohrungsenden zwischen den Langseiten (23) der Ringöffnung (21) gelegen sind,
c) mehrere Steuermittel (35, 37, 39, 41, 45, 51) vorhanden sind, von denen zumindest einige verstellbar ausgebildet sind und zumindest die letzteren zur wahlweisen Beeinflussung unterschiedlicher, zu verschiedenen Längenabschnitten der Ringöffnung (21) fließender Zonen des Kunststoffstromes am Strömungskanal in ausgewählter Lageanordnung vorgesehen sind, und
d) jedes verstellbare Steuermittel (37, 41, 45, 51) unabhängig von den anderen Steuermitteln verstellbar ist.

5. Extrusionskopf nach Anspruch 4, dadurch gekennzeichnet, daß zumindest je ein verstellbares Steuermittel (45) für die Beeinflussung der zu jeder der kurzen Stirnseiten (24) der Ringöffnung (21) fließenden Zonen des Kunststoffstromes und eine Mehrzahl von Steuermitteln (41) für die Beeinflussung der zu unterschiedlichen Längenabschnitten der Langseiten (23) der Ringöffnung (21) fließenden Zonen des Kunststoffstromes vorgesehen sind.

6. Extrusionskopf nach Anspruch 4 oder 5, dadurch gekennzeichnet, daß als festeingestellte Steuermittel eine örtliche Drosselung des Kunststoffstromes im Strömungskanal bewirkende Verengungen (39) vorgesehen sind.

7. Extrusionskopf nach einem der Ansprüche 4 bis 6, dadurch gekennzeichnet, daß der Strömungskanal in dem an die Ringöffnung (21) angrenzenden Bereich in Form eines ununterbrochenen, engen Spaltes (31) ausgebildet ist, zu dessen der Ringöffnung (21) abgekehrtem oberen Endbereich der Kunststoffstrom über eine Mehrzahl von erweiterten Strömungstaschen (35) zuführbar ist, die längs des Umfanges des oberen Randbereichs des Spaltes (31) zueinander versetzt angeordnet sind und deren jeder ein verstellbares Steuermittel in Form eines in seiner Längsrichtung verschiebbaren Staubolzens (37) zugeordnet ist, durch den der lichte Querschnitt des Einströmbereichs der zugehörigen Tasche (35) veränderbar ist.

8. Extrusionskopf nach Anspruch 7, dadurch gekennzeichnet, daß die Breite des Spaltes (31) an dem am Austrittsende der Ringöffnung (21) gebildeten Extrusionsschlitz (33) durch verstellbare Steuermittel in Form von die Ringöffnung (21) an jeder Langseite (23) begrenzenden beweglichen Randleisten (51) einstellbar ist, deren Abstand von der gegenüberliegenden Endwand des Spaltes (31) durch Stellschrauben (57) veränderbar ist.

9. Extrusionskopf nach Anspruch 8, dadurch gekennzeichnet, daß der lichte Querschnitt des stromaufwärts der Randleisten (51) gelegenen Abschnitts des Spaltes (31) mittels einer Mehrzahl von zueinander in Umfangsrichtung des Spaltes (31) versetzt angeordneten Steuerschiebern (41, 45) bereichsweise veränderbar ist, von denen jeder mittels je einer Stellschraube (43 bzw. 46) lageverstellbar ist, und daß zumindest je ein Steuerschieber (45) als verstellbares Steuermittel für die Beeinflussung der zu jeder der kurzen Stirnseiten (24) der Ringöffnung fließenden Zonen des Kunststoffstromes in dem oberhalb der Stirnseiten (24) gelegenen Bereich des Spaltes (31) angeordnet ist.

10. Extrusionskopf nach Anspruch 6 und einem der übrigen Ansprüche 4 bis 9, dadurch gekennzeichnet, daß am Auslaßbereich jeder der Strömungstaschen (35) je eine der als festeingestellte Steuermittel dienenden Verengungen (39) vorgesehen ist.

## Claims

1. Process for producing filled fluid containers consisting of thermoplastic plastics material, in which:
a) the plastics material is extruded to form a hose;
b) the outer side of the hose is laid against the walls of a moulding tool by means of differential pressure acting on its hose wall such that the hose is shaped to form a strip of containers which comprises a plurality of small containers lying adjacent one another and preferably having an ampoule-like shape;
c) the containers are closed by welding processes performed at selected portions of the wall; and
d) each container is filled at least substantially simultaneously with the other containers, before a final welding process which closes its filler opening by means in each case of a filler plug which cooperates with the filling opening;
characterised in that:
e) the hose is extruded in the form of a wide, flat hose such that its outer side can be laid against the walls of the moulding tool forming a plurality of containers lying adjacent one another.

2. Process according to Claim 1, characterised in that irregularities in shape which are in a specific positional relationship relative to the respective adjacent container group are formed by means of the moulding tool on at least one of the two side edges of the container strip, which extend in the longitudinal direction of the containers; and in that the irregularities in shape are used as a positioning means for controlling a timed advance movement of the container strip towards a punching device, said advance movement being adapted to the container filling and welding processes, and the side edges of the container strip being cut off as lateral waste in said punching device.

3. Process according to Claim 2, characterised in that the irregularities in shape are in the form of projecting cams, depressions or recesses; and in that the container strip is transported to the punching device by a movable advance member which can be brought into mechanical engagement with the irregularities in shape.

4. Extrusion head for producing a hose for performing the process according to any one of Claims 1 to 3, having at least one inner flow duct for the delivery of flowable thermoplastic plastics material to an extrusion slit which is in the form of an annular opening adapted to the cross-section of the hose, and having control means for influencing the plastics material stream flowing in the flow duct to the extrusion slit, characterised:
a) in that the annular opening (21) has the shape of a flattened ring with two opposite longitudinal sides (23) extending at least approximately straight, and with short, curved end faces (24) connecting the adjacent ends of the two longitudinal sides (23);
b) in that the extrusion head (3) comprises a row of continuous bores (59) in each of which a filler plug (58) is disposed so as to be moved longitudinally, and of which the lower bore ends are located between the longitudinal sides (23) of the annular opening (21);
c) in that a plurality of control means (35, 37, 39, 41, 45, 51) are present of which at least some are formed so as to be adjustable and at least the latter are provided at the flow duct in a selected positional arrangement for optionally influencing different zones of the plastics material stream flowing to different longitudinal portions of the annular opening (21); and
d) in that each adjustable control means (37, 41, 45, 51) can be adjusted independently of the other control means.

5. Extrusion head according to Claim 4, characterised in that at least one adjustable control means (45) is provided in each case for influencing the zones of the plastics material stream flowing to each of the short end faces (24) of the annular opening (21), and a plurality of control means (41) are provided for influencing the zones of the plastics material stream flowing to different longitudinal portions of the longitudinal sides (23) of the annular opening (21).

6. Extrusion head according to Claim 4 or Claim 5, characterised in that narrowed portions (39) are provided as a fixed control means bringing about local throttling of the plastics material stream in the flow duct.

7. Extrusion head according to any one of Claims 4 to 6, characterised in that, in the area adjoining the annular opening (21) the flow duct is in the form of a continuous, narrow gap (31) to the upper end region of which, facing away from the annular opening (21), the plastics material stream can be delivered via a plurality of widened flow pockets (35) which are disposed offset relative to one another along the periphery of the upper edge region of the gap (31) and with each of which is associated an adjustable control means in the form of a plug bolt (37) which can be displaced in its longitudinal direction and by means of which the internal cross-section of the inlet region of the associated pocket (35) can be varied.

8. Extrusion head according to Claim 7, characterised in that the width of the gap (31) at the extrusion slit (33) formed at the outlet end of the annular opening (21) can be adjusted by adjustable control means in the form of movable edge strips (51) which delimit the annular opening (21) on each longitudinal side (23) and of which the spacing from the opposite end wall of the gap (31) can be varied by set screws (57).

9. Extrusion head according to Claim 8, characterised in that the internal cross-section of the portion of the gap (31) located upstream of the edge strips (51) can be varied in regions by means of a plurality of control slides (41, 45) which are disposed offset relative to one another in the peripheral direction of the gap (31) and the position of each of which can be adjusted by means of a set screw (43 or 46) in each case; and in that at least one control slide (45) in each case is disposed in the region of the gap (31) located above the end faces (24) as an adjustable control means for influencing the zones of the plastics material stream flowing to each of the short end faces (24) of the annular opening.

10. Extrusion head according to Claim 6 and any one of the remaining Claims 4 to 9, characterised in that one narrowed portion (39), acting as the fixed control means, is provided at the outlet region of each of the flow pockets (35).

## Revendications

1. Procédé de fabrication de récipients remplis de liquide en matière thermoplastique, dans lequel
a) la matière plastique est extrudée sous la forme d'un tuyau,
b) le tuyau est appliqué, au moyen d'une pression différentielle agissant sur sa paroi, avec son côté extérieur contre les parois d'un outil de moulage, de manière que le tuyau prenne la forme d'une bande de récipients qui se présente sous la forme de plusieurs petits récipients juxtaposés, de préférence du type d'ampoules,
c) les récipients sont fermés par des opérations de soudage exécutées sur des parties de paroi sélectionnées et
d) avant exécution d'une dernière opération de soudage, fermant son ouverture de remplissage, chaque récipient est rempli au moins à peu près en même temps que les autres récipients, au moyen d'une aiguille de remplissage respective coopérant avec cette ouverture,
caractérisé en ce que
e) le tuyau est extrudé sous la forme d'un tuyau plat large, pour l'application de son côté extérieur contre les parois de l'outil de moulage formant plusieurs récipients juxtaposés.

2. Procédé selon la revendication 1, caractérisé en ce qu'au moyen de l'outil de moulage il est formé, sur au moins l'un des deux bords latéraux de la bande de récipients, qui s'étendent dans la direction longitudinale des récipients, des irrégularités de structure qui se trouvent dans une position définie par rapport au groupe voisin de récipients, et en ce que les irrégularités de structure sont utilisées comme moyens de positionnement pour commander un mouvement d'avance de la bande de récipients, dont la cadence est adaptée aux opérations de remplissage ou de soudage des récipients, vers un dispositif de découpe dans lequel les bords latéraux de la bande de récipients sont sectionnés sous forme de chutes latérales.

3. Procédé selon la revendication 2, caractérisé en ce que les irrégularités de structure ont la forme de cames saillantes, de creux ou d'évidements et en ce que la bande de récipients est transportée vers le dispositif de découpe par un organe d'avance mobile, pouvant être amené en prise mécanique avec les irrégularités de structure.

4. Tête d'extrusion pour la fabrication d'un tuyau pour la mise en oeuvre du procédé selon l'une des revendications 1 à 3, comportant au moins un canal d'écoulement intérieur pour l'arrivée de matière thermoplastique fluide à une fente d'extrusion, qui a la forme d'une ouverture annulaire adaptée à la section transversale du tuyau, et comportant des moyens de commande destinés à influencer le courant de matière plastique s'écoulant dans le canal d'écoulement vers la fente d'extrusion, caractérisée en ce que
a) l'ouverture annulaire (21) a la forme d'un anneau aplati avec deux grands côtés opposés l'un à l'autre, au moins approximativement rectilignes et avec des côtés frontaux (24), courts, courbés, reliant les extrémités voisines l'une de l'autre des deux grands côtés (23),
b) la tête d'extrusion (3) comporte une série de trous (59) débouchants dans chacun desquels est montée mobile longitudinalement une aiguille de remplissage (58) et dont les extrémités inférieures des trous se trouvent entre les grands côtés (23) de l'ouverture annulaire (21),
c) plusieurs moyens de commande (35, 37, 39, 41, 45, 51) sont prévus dont certains au moins sont déplaçables et au moins les derniers sont prévus sur le canal d'écoulement, dans une position sélectionnée, pour influencer aux choix différentes zones du courant de matière plastique, s'écoulant en différents tronçons de longueur de l'ouverture annulaire (21), et
d) chaque moyen de commande (37, 41, 45, 51) mobile est déplaçable indépendamment des autres moyens de commande.

5. Tête d'extrusion selon la revendication 4, caractérisée en ce qu'au moins un moyen de commande (45) déplaçable est prévu pour influencer les zones du courant de matière plastique s'écoulant vers chacun des côtés frontaux (24) courts de l'ouverture annulaire (21) et plusieurs moyens de commande (41) sont prévus pour influencer les zones du courant de matière plastique, s'écoulant vers différents tronçons de longueur des grands côtés (23) de l'ouverture annulaire (21).

6. Tête d'extrusion selon les revendications 4 ou 5, caractérisée en ce qu'il est prévu comme moyens de commande réglés de manière fixe, des rétrécissement (39) opérant un étranglement local du courant de matière plastique dans le canal d'écoulement.

7. Tête d'extrusion selon l'une des revendications 4 à 6, caractérisée en ce que le canal d'écoulement a la forme, dans la zone adjacente à l'ouverture annulaire (21), d'une fente (31) étroite, ininterrompue, le courant de matière plastique pouvant être amené à sa zone d'extrémité supérieure, tournée à l'opposé de l'ouverture annulaire (21), par une pluralité de poches d'écoulement (35) élargies, qui sont décalées les unes par rapport aux autres le long de la périphérie de la zone de bordure supérieure de la fente (31) et à chacune desquelles est associé un moyen de commande déplaçable sous la forme d'un boulon de retenue (37), déplaçable dans sa direction longitudinale, par lequel il est possible de faire varier la section transversale intérieure de la zone d'écoulement de la poche (35) correspondante.

8. Tête d'extrusion selon la revendication 7, caractérisée en ce que la largeur de la fente (31) sur la fente d'extrusion (33) formée à l'extrémité de sortie de l'ouverture annulaire (21), est réglable par des moyens de commande déplaçables sous la forme de baguettes de bordure (51) mobiles, limitant l'ouverture annulaire (21) sur chaque grand côté (23), dont la distance par rapport à la paroi terminale opposée de la fente (31), peut être modifiée par des vis de réglage (57).

9. Tête d'extrusion selon la revendication 8, caractérisée en ce que la section transversale intérieure de la partie de la fente (31), située en amont des baguettes de bordure (51), peut être modifiée par endroits au moyen d'une pluralité de tiroirs de commande (41, 45), décalés les uns par rapport aux autres dans la direction périphérique de la fente (31), dont chacun est déplaçable au moyen d'une vis de réglage respective (43 ou 46), et en ce qu'au moins un tiroir de commande (45) est prévu comme moyen de commande réglable pour influencer les zones du courant de matière plastique, s'écoulant vers chacun des côtés frontaux (24) courts de l'ouverture annulaire, dans la zone de la fente (31), située au-dessus des côtés frontaux (24).
